Europäisches Patentamt

(19) European Patent Office

Office européen des brevets

(11) **EP 0 590 916 B1**

(12) **EUROPEAN PATENT SPECIFICATION**

(45) Date of publication and mention
of the grant of the patent:
**03.04.1996 Bulletin 1996/14**

(51) Int. Cl.⁶: **B60C 11/12**, B60C 11/11

(21) Application number: **93307650.7**

(22) Date of filing: **28.09.1993**

(54) **Pneumatic tire**

Luftreifen

Bandage pneumatique

(84) Designated Contracting States:
**CH DE LI SE**

(30) Priority: **30.09.1992 JP 286731/92**

(43) Date of publication of application:
**06.04.1994 Bulletin 1994/14**

(73) Proprietor: **BRIDGESTONE CORPORATION
Tokyo 104 (JP)**

(72) Inventor: **Aoki, Namito
Kokubunji-shi, Tokyo (JP)**

(74) Representative: **Whalley, Kevin et al
MARKS & CLERK,
57-60 Lincoln's Inn Fields
London WC2A 3LS (GB)**

(56) References cited:
**EP-A- 0 540 339**

- **PATENT ABSTRACTS OF JAPAN vol. 016, no. 561
(M-1341)3 December 1992 & JP-A-04 215 505
(BRIDGESTONE CORP.) 6 August 1992**
- **PATENT ABSTRACTS OF JAPAN vol. 016, no. 563
(M-1342)4 December 1992 & JP-A-04 218 411
(OHTSU TIRE&RUBBER CO. LTD.) 10 August
1992**
- **PATENT ABSTRACTS OF JAPAN vol. 013, no. 083
(M-802)27 February 1989 & JP-A-63 279 904
(TOYO TIRE&RUBBER CO. LTD.) 17 November
1988**
- **PATENT ABSTRACTS OF JAPAN vol. 013, no. 083
(M-802)27 February 1989 & JP-A-63 279 903
(TOYO TIRE&RUBBER CO. LTD.) 17 November
1988**

Printed by Rank Xerox (UK) Business Services
2.9.13/3.4

**Description**

The present invention relates to a pneumatic tire, and more particularly to a pneumatic tire which has a block pattern with sipes formed in the blocks.

Description of the Related Art:

As tires for use on vehicles for running on snowy and icy roads, pneumatic tires are known in which sipes are provided in the blocks of the tire so as to improve the performance of running on snowy and icy roads by means of the edge effect of the sipes.

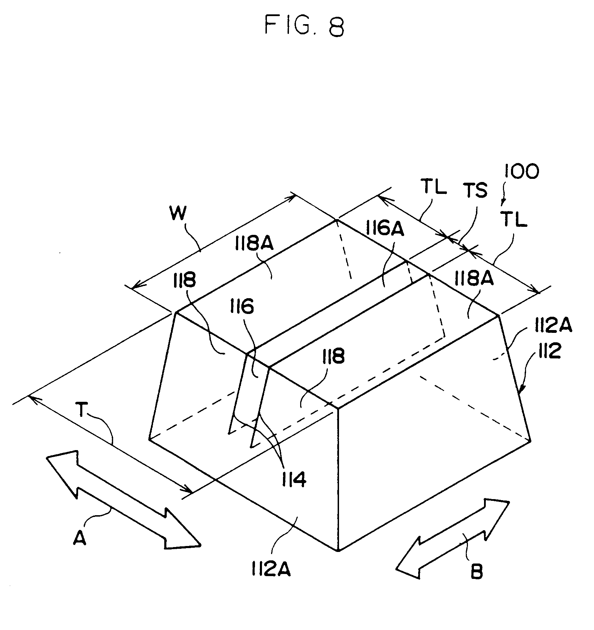

Fig. 8 shows an example of a conventional block with sipes. The tread of a block 112 of this pneumatic tire 100 is rectangular, and a pair of sipes 114 extending in the transverse direction of the tire (in the direction of the double-headed arrow B) is provided in a central portion of the tire as viewed in the circumferential direction of the tire (in the direction of double-headed arrow A). A central area sandwiched between the sipes 114 is a narrow area 116, and its rigidity is smaller than that of wide areas 118 provided on both sides thereof. When the block 112 is brought into contact with the road surface and receives a frictional force from the road surface in the direction of a tangential line to the outer periphery of the tire, the narrow area 116 with small rigidity undergoes a greater displacement than the wide areas 118. Consequently, one of the pair of sipes 114 is closed, and the other is opened, so that driving performance and braking performance are obtained due to the edge effect of the narrow area 116. As tires of this type, Japanese Patent Application Laid-Open Nos. 279903/1988 and 279904/1988 disclose pneumatic tires having blocks in which the ratio of the width of the narrow area to the width of the wide area is not more than 0.8.

Although it has been confirmed that an effect is obtained to a certain extent by providing the pneumatic tire with the pair of sipes in the above-described manner, the performance is not comparable to the performance of spike tires on ice. Hence, there has been a demand in the market for a further improvement in performance.

Accordingly, it is an object of the present invention to provide a pneumatic tire which exhibits improved running performance on ice over conventional pneumatic tires.

In accordance with one aspect of the present invention, there is provided a pneumatic tire comprising a plurality of blocks, wherein each of the blocks has a set of two sipes extending substantially in a transverse direction of the tire, the sipes dividing the block into a narrow area formed therebetween and wide areas located so as to sandwich the narrow area, and a length of one side end of at least one of the wide areas in a circumferential direction of the tire is different from a length of another side end of that wide area in the circumferential direction of the tire. The "side end of the wide area" referred to herein means an end of the wide area which extends substantially in the circumferential direction of the tire. A "side end of the block" refers to an end of the block which extends substantially in the circumferential direction of the tire. A "front end of the block" means an end of the block which extends substantially in the transverse direction of the tire. A "rear end of the block" similarly means an opposing end of the block which extends substantially in the transverse direction of the tire.

As compared with conventional tires having blocks in which the length of the wide area in the circumferential direction of the tire is identical at side ends of the block, it is possible to increase the edge pressure occurring when frictional force acts. Accordingly, driving and braking performances on ice improve remarkably.

In accordance with an embodiment of the present invention, given that the depth of the sipe is **h**, the average length of the narrow area in the circumferential direction of the tire is **TS**, and the average length of the wide area in the circumferential direction of the tire is **TL**, then $0.1 < TS/h < 0.5$, $0.78 < TL/h < 2.07$, and $0.1 \leq TS/TL \leq 0.8$. If these conditions are met, the respective rigidities of the narrow area and the wide areas and the difference in rigidity between these areas can be made optimal, the durability of the blocks can be maintained, and the running performance can be improved. In addition, to satisfactorily maintain the ground contact pressure of the wide area, the relationship between the depth **hs** of the sipe as measured from the tread of the narrow area and the depth **h** of the sipe as measured from the tread of the wide area is preferably such that $0.55 \leq h_s/h \leq 1$. Additionally, it is preferable to provide the wide area with an auxiliary sipe extending in the transverse direction of the tire or with a sipe extending in the circumferential direction of the tire.

In accordance with another aspect of the present invention, there is provided a pneumatic tire comprising a plurality of blocks, wherein each of the blocks has a set of two sipes extending substantially in a transverse direction of the tire, the sipes dividing the block into a narrow area formed therebetween and wide areas located so as to sandwich the narrow area, and the width of at least one of the wide areas in a circumferential direction of the tire is gradually larger from one side end of the wide area toward another side end of the wide area.

Other objects, features and advantages of the present invention will become more apparent from the following detailed description of the invention when read in conjunction with the accompanying drawings.

Fig. 1 is a development view of a tread showing blocks of a pneumatic radial tire in accordance with a first embodiment of the present invention;

Fig. 2A is an enlarged plan view of a block 12A of the tread shown in Fig. 1;

Fig. 2B is a variation of Fig. 2A in a case in which β is finite;

Fig. 3 is a cross-sectional view, taken along a circumferential direction of the tire, of the block of the pneumatic radial tire in accordance with the first embodiment of the present invention;

Fig. 4 is a side elevational view, as viewed from a transverse direction of the tire, of a state in which the block of the pneumatic radial tire in accordance with the first embodiment of the present invention has undergone deformation by being subjected to a frictional force;

Fig. 5 is a cross-sectional view, taken along the circumferential direction of the tire, of a block of a pneumatic radial tire in accordance with a second embodiment of the present invention;

Fig. 6 is a development view of a tread showing blocks of a pneumatic radial tire in accordance with a third embodiment of the present invention;

Fig. 7 is a development view of a tread showing blocks of a pneumatic radial tire in accordance with a fourth embodiment of the present invention;

Fig. 8 is a perspective view of a block with sipes of a conventional pneumatic radial tire; and

Fig. 9 is a graph showing the value of an index $\mu$ of the performance on ice in a case where a ratio between a length **a** of a side end of a wide area and a length **b** of another side end thereof is varied.

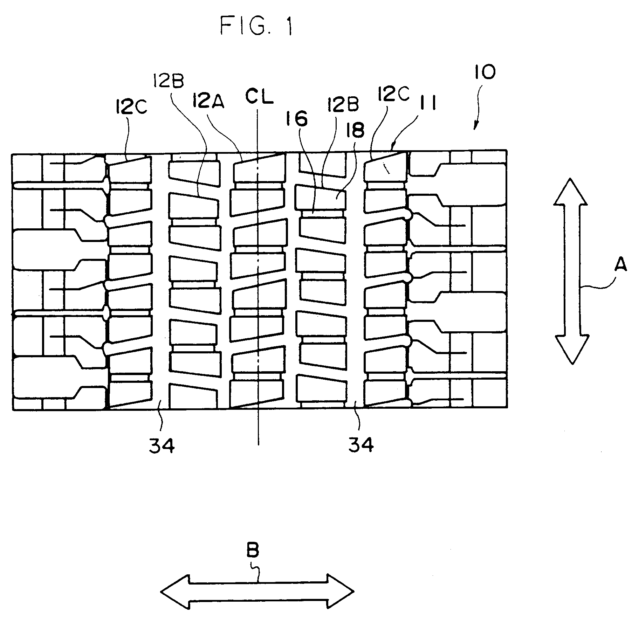

Referring now to Figs. 1 through 4, a description will be given of a first embodiment of a pneumatic tire in accordance with the present invention.

As shown in Fig. 1, a pneumatic tire 10 in accordance with the present embodiment has a block pattern, and each block 12 has a substantially prismatic shape.

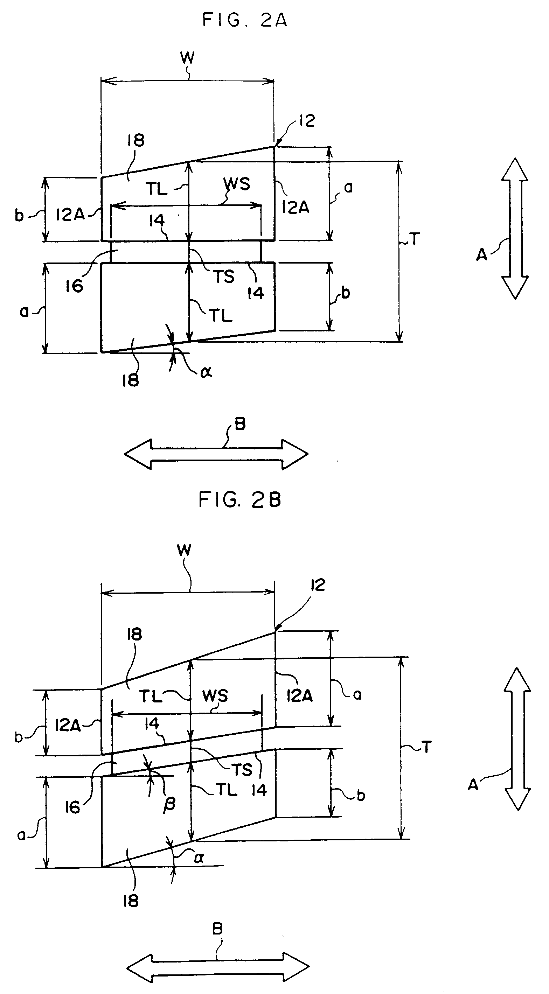

Fig. 2 is an enlarged view of one block of the tire shown in Fig. 1. In a central potion of the block 12, a pair of parallel sipes 14 is formed so as to extend in a substantially transverse direction of the tire (in the direction of the double-headed arrow B). The sipe 14 referred to herein means a groove having a width of preferably not more than 1 mm, more preferably not more than 0.6 mm. The block 12 is divided into three areas in the circumferential direction of the tire by these sipes 14. The area sandwiched by the pair of sipes 14 is a narrow area 16, while areas adjacent, as viewed in the circumferential direction of the tire, to both sides of the narrow area 16 are wide areas 18.

Given that the average width of the narrow area 16 in the circumferential direction of the tire (in the direction of arrow A) is **TS**, and that the average width of the wide area 18 in the circumferential direction of the tire is **TL**, the ratio between **TS** and **TL**, i.e., **TS/TL**, is preferably such that $0.1 \leq TS/TL \leq 0.8$, more preferably $0.2 \leq TS/TL \leq 0.5$. **TS** is preferably in the range of 1.5 mm to 10 mm, more preferably in the range of 2.5 mm to 7 mm. The dimension **T** (average) of the block 12 in the circumferential direction of the tire is preferably in the range of $15\ mm \leq T \leq 40\ mm$, more preferably in the range of $20\ mm \leq T \leq 35\ mm$.

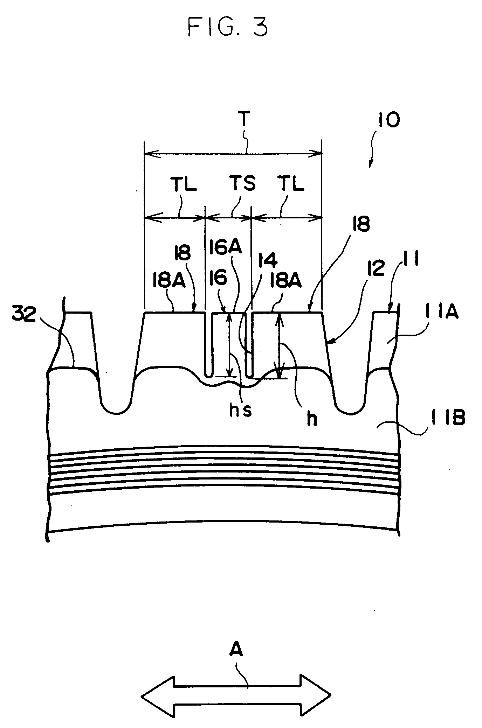

Fig. 3 is a cross-sectional view, taken along the circumferential direction of the tire, of the block 12 shown in Fig. 2.

The relationship between the width **TL** of the wide area 18 in the circumferential direction of the tire and the depth **h** of the sipe 14 as measured from a tread 18A of the wide area 18 is preferably such that $0.78 < TL/h < 2.07$. If **TL/h** is not more than 0.78, the block becomes crushed and deformed due to a decline in the rigidity of the block, and only an edge of the block comes into contact with the road surface, which causes a decline in the coefficient of friction. If **TL/h** is not less than 2.07, a water film is formed due to frictional heat, resulting in a decline in the coefficient of friction.

The relationship between the width **TS** of the narrow area 16 and the depth **h** of the sipe 14 is preferably such that $0.1 < TS/h < 0.5$. If **TS/h** is not more than 0.1, the rigidity of the narrow area 16 becomes too low, so that it is impossible to increase the edge pressure to a sufficient level, resulting in a decline in the effect of cutting the water film. If **TS/h** is not less than 0.5, the rigidity becomes too large, so that it becomes difficult for the edge to rise, resulting in a decline in the effect to cut the water film.

In the present invention, when the tire is new, the ratio between the depth $h_s$ of the sipe 14, as measured from the tread 16A of the narrow area 16, and the depth **h** of the sipe 14, as measured from the tread 18A of the wide area 18, i.e., $h_s/h$, is such that $h_s \leq h$, preferably $0.55 \leq h_s/h \leq 1$.

In the present embodiment, when the tire is new, the tread 16A of the narrow area 16 is at the same height as the tread 18A of the wide area 18. If the tread 16A of the narrow area 16 is made to project more than the tread 18A of the wide area 18 when the tire is new, the ground contact pressure of the wide area 18 declines, and the speed of wear of the wide area 18 having high rigidity exceeds that of the narrow area 16 having low rigidity. In addition, as wear progresses, the narrow area 16 further projects more than the wide area 18, resulting in a further decline in the ground contact pressure of the wide area 18. Hence, it is undesirable to make the tread 16A of the narrow area 16 project more than the tread 18A of the wide area 18 when the tire is new.

As shown in Fig. 2, opposite side ends of the wide area 18 (i.e., the widths of the wide area 18 in the circumferential direction of the tire) are preferably provided with different lengths. If it is assumed that the length of the longer side of the wide area 18 in the circumferential direction of the tire is **a**, that the length of the shorter side thereof in the circumferential direction of the tire is **b**, and that the average length of the block 12 in the transverse direction of the tire is **W**, the block 12 should preferably satisfy the formula $0.03 < (a - b)/W < 0.4$. If $(a - b)/W$ is not more than 0.03, the difference in the transverse rigidity of the block portion is small, so that it is impossible to expect the effect of a rise in the edge pressure. On the other hand, if $(a - b)/W$ is not less than 0.4, the difference in the transverse rigidity of the block portion becomes too large, so that the deformation of the portion having small rigidity becomes large, making it impossible for the block to come into contact with the ground. Hence, the performance on ice drops. More preferably, the block 12 should satisfy the formula $0.07 < (a - b)/W < 0.3$ .

In addition, given that an angle formed by a front or rear end of the block 12 with respect to the transverse direction of the tire is $\alpha$, $\alpha$ is preferably set such that $0° \leq \alpha < 30°$, more preferably $5° \leq \alpha < 30°$. Further, given that an angle formed by the sipe 14 with respect to the transverse direction of the tire is $\beta$, $\beta$ is preferably set such that $0° \leq \beta < 15°$, more preferably $0° \leq \beta < 10°$. If $\alpha$ is not less than 30°, the effect of improving the driving performance and the braking performance declines, which is not desirable. Moreover, in a case where $\beta$ is not less than 15°, the effect of improving the driving performance and the braking performance declines, which is not desirable. In the present embodiment shown in Fig. 2A, $\alpha = 9°$, $\beta = 0°$.

The length of the narrow area 16 in the transverse direction of the tire is preferably set to be shorter than the length of wide area 18 in the transverse direction of the tire. For example, each side end of the narrow area 16 is preferably located 0 to 3 mm inwardly of the block 12, more preferably 0 to 1.5 mm inwardly thereof from the side end of the wide area 18 (i.e., from the side end of the block).

As shown in Fig. 1, the pneumatic tire 10 in accordance with the present embodiment has blocks of three different shapes. They are shown as blocks 12A, 12B, and 12C in order from the equatorial plane CL of the tire toward the shoulder.

In the block 12A, the front and rear ends of the block (i.e., the front end of the front-side large-width area 18 and the rear end of the rear-side wide area 18) are inclined rightwardly upward with respect to the transverse direction of the tire, and $\beta = 0°$.

In the block 12B, its front and rear ends are inclined leftwardly upward with respect to the transverse direction of the tire, and $\beta = 0°$.

In the block 12C, its front and rear ends are inclined rightwardly upward with respect to the transverse direction of the tire, and $\beta = 0°$.

If all of the blocks 12A, 12B, and 12C are averaged, the angle $\alpha$ of inclination of the end of the wide area 18 in the circumferential direction of the tire is 9°, the average width **TL** of the wide area 18 in the circumferential direction of the tire is 13.2 mm, and the width **TS** of the narrow area 16 in the circumferential direction of the tire is 3.5 mm. On one side of the block, the length of the narrow area 16 in the transverse direction of the tire is set to be 1 mm shorter than that of the wide area 18. In addition, the depth **h** of the sipe 14, as measured from the tread 18A of the wide area 18, is 11 mm, and the width thereof is 0.5 mm.

Further, if all of the blocks 12A, 12B, and 12C are averaged, the dimension **T** in the circumferential direction of the tire is 33 mm, and the length **W** in the transverse direction of the tire is 28.7 mm.

Returning to Fig. 3, a tread 11 of the pneumatic tire 10 in accordance with the present embodiment is formed of two types of rubber, i.e., in two layers arranged in the direction of thickness of the tread 11. Specifically, an upper layer 11A, which is on the cap side, i.e., on the tread side coming into contact with the road surface, is formed of foamed rubber having closed cells. Meanwhile, a lower layer 11B on the base side is formed of ordinary unfoamed rubber having a low-heat generating characteristic.

In the pneumatic tire 10, the tread side, i.e., the upper layer 11A, of the tread 11 is preferably formed of foamed rubber having a volume of at least 10% of the entire volume of the tread 11.

The foamed rubber has a foaming rate ranging from 5 to 50%, and has closed cells with an average cell diameter of 5 to 150 μm, and its hardness is set to 45° to 75°. As a result, by virtue of the edge effect of the closed cells appearing on the surface of the tread 11, the foamed rubber is capable of improving the performance on ice more effectively, and of maintaining excellent performance on ice for extended periods of time.

Here, if the ratio of the foamed rubber on the ground-contacting side of the tread 11 is less than 10% of the entire volume of the tread 11, the effect of improving the performance on ice is small. In addition, the hardness **Hd** of the foamed rubber is desirably 45° to 70°, preferably 50° to 70°, more preferably 54° to 70°. The higher the hardness **Hd** of the foamed rubber, the less the cells are liable to be crushed even under high ground contact pressure, and the more the performance on ice improves. Here, the hardness **Hd** of the foamed rubber was measured at room temperature in compliance with JIS (Japanese Industrial Standards) K6301. If the hardness **Hd** of the foamed rubber is less than 45°, wear resistance deteriorates, and tread fatigue occurs, which is not desirable. If the hardness **Hd** exceeds 70°, the tread 11 becomes too hard, the operating efficiency deteriorates, and the amount of heat generated is large, which is not desirable.

In addition, the foaming rate **Vs** of the foamed rubber is preferably in the range of 5 to 50%, more preferably 5 to 30%. Here, the foaming rate **Vs** of the foamed rubber is expressed as $Vs = (\rho_0/\rho_1 - 1) \times 100$ (%) , where $\rho_1$ is the density (g/cm$^3$) of the foamed rubber, $\rho_0$ is the density (g/cm$^3$) of the solid-phase portion of the foamed rubber. If the foaming rate **Vs** of the foamed rubber is less than 5%, it is impossible to obtain flexibility at low temperatures. If the foaming rate exceeds 50%, wear resistance declines, and wear resistance on a dry road surface is insufficient in practice, which is not desirable.

Further, the average cell diameter of the closed cells of the foamed rubber is preferably 5 to 150 µm, more preferably 10 to 100 µm. If the average cell diameter of the closed cells of the foamed rubber is less than 5 µm, the effect of improving the performance on ice and snow is small. On the other hand, if the average cell diameter exceeds 150 µm, the wear resistance declines by a large degree, and resistance against fatigue declines. As a result, deformation of the block and clogging of the sipes 14 occur during running, the performance on snow declines, cut-resistance declines, breakage of blocks occurs frequently, and it is difficult to obtain a stable configuration during manufacture. For these reasons, it is not desirable if the average cell diameter exceeds 150 µm.

It should be noted that the foamed rubber is formed by adding a foaming agent to an ordinary rubber compound using a specific weight part of a specific carbon black, and by heating the same under pressure in accordance with a usual method of tire manufacture. As the foaming agent, it is preferable to use, for instance, an agent based on dinitrosopentamethylenetetramine jointly using urea, as well as benzene sulfonyl hydrazide derivatives, particularly oxybis-benzenesulfonyl hydrazide in the light of the efficiency in manufacturing and processing.

As for the rubber component contained in the tread 11, it is possible to use a single component selected from natural rubber, polyisoproprene rubber, polybutadiene rubber, butyl rubber, and styrene-butadience copolymer rubber with a low styrene content, or a mixture of two or more kinds of these rubbers. By using these rubbers, the tread 11 is capable of sufficiently exhibiting rubber elasticity at low temperatures.

In the presen embodiment, the ratio of the foamed rubber forming the upper layer 11A in the total volume of the tread 11 is 26%, and a boundary surface 32 between the upper layer 11A and the lower layer 11B is at a position which is at substantially one half of the depth of a circumferential main groove 34 (shown in Fig. 1). In addition, as for the foamed rubber in the upper layer 11A, the foaming rate **Vs** is 18%, the average cell diameter is 25 µm, and the hardness is 64°, while the rubber in the lower layer 11B has a hardness of 62°.

Next, a description will be given of the operation of the present embodiment.

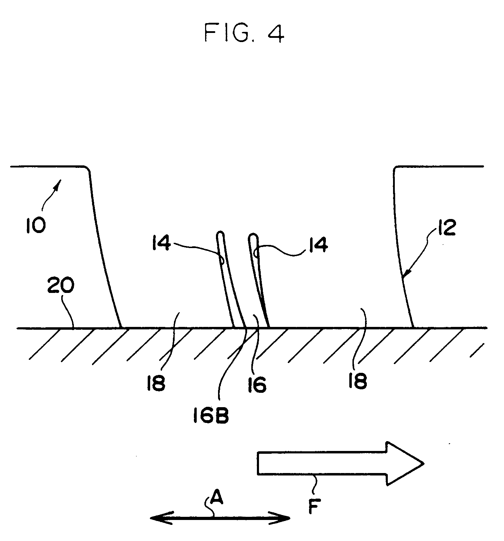

In the block 12, the narrow area 16 has a smaller rigidity than that of the wide area 18 on either side thereof since the narrow area 16 has a smaller area than that of the wide area 18. Accordingly, when the block 12 is brought into contact with a road surface 20 during driving or braking, as shown in Fig. 4, and a frictional force acts on the block 12 in the direction of a tangent to the circumference of the tire (in the direction of arrow F in Fig. 4), the deformation of the wide area 18 is small, and the deformation of the narrow area 16 is large. As a result, of the two sipes 14, the sipe 14 on the right-hand side in Fig. 4 is closed, while the sipe 14 on the left-hand side is opened. Hence, it is possible to obtain an edge effect of the edge 16B (on the road surface 16A side) of the narrow area 16, and, at the same time, the edge effect due to the closed cells of the foamed rubber is added, making it possible to obtain the driving and braking performances.

In the pneumatic tire 10 of the present embodiment, the length of the wide area 18 in the circumferential direction of the tire is varied at its side ends, and a setting is particularly provided such that $0.03 < (a - b)/W < 0.4$. Accordingly, as compared with a conventional block in which the length of the wide area in the circumferential direction of the tire is identical at the side ends thereof, it is possible to increase the edge pressure occurring when a frictional force is applied. As a result, the effect of cutting the water film on ice improves, so that it is possible to obtain better driving and braking performances than those of the conventional pneumatic tires.

Here, if the length **T** of the block 12 in the circumferential direction of the tire exceeds 40 mm, the ground contact pressure declines with the increase in the length of the block 12 in the circumferential direction of the tire, so that it is difficult to expect the edge effect, and the driving and braking performances decline. Hence, it is undesirable for the dimension **T** to exceed 40 mm. On the other hand, if the dimension **T** in the circumferential direction of the tire is less than 15 mm, the rigidity of the block 12 becomes too small, with the result that the edge effect of the block 12 cannot be expected, and the driving and braking performances decline. Hence, it is undesirable for the dimension **T** to be less than 15 mm.

If the ratio between the width **TS** of the narrow area 16 and the width **TL** of the wide area 18, i.e., **TS/TL**, exceeds 0.8, the difference in rigidity between the narrow area 16 and the wide area 18 becomes small, and it becomes difficult for the sipe 14 to open during braking and driving, making it impossible to expect the edge effect. On the other hand, if the ratio **TS/TL** is less than 0.1, the rigidity of the narrow area 16 becomes too low, and the durability of the narrow area 16 declines. Therefore, it is undesirable for the ratio **TS/TL** to be less than 0.1.

Next, a description will be given of a second embodiment of the present invention.

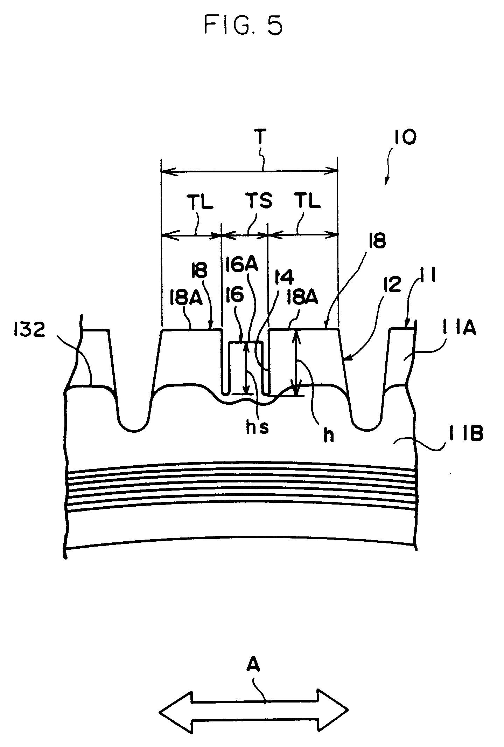

This embodiment is similar to the first embodiment except that the tread 16A of the narrow area 16 is made lower than the tread 18A of the wide area 18, as shown in Fig. 5. It should be noted that, in the present embodiment, the tread 16A of the narrow area 16 is set to be 3 mm lower than the tread 18A of the wide area 18, and **h$_s$/h** is 0.73.

By setting the tread 16A of the narrow area 16 lower than the tread 18A of the wide area 18, the respective distances from the center of rotation of the tire to the tread 16A of the narrow area 16 and the tread 18A of the wide area 18 differ. Accordingly, when the tire is new or in an early period of wear, the narrow area 16 does not project more than the wide area 18, thereby making it possible to prevent the ground contact pressure of the wide area 18 from declining. Moreover, during an intermediate period of wear and thereafter, the rigidity of the narrow area 16 rises, and the speed at which the narrow area 16 projects is delayed, so that it is possible to maintain satisfactory driving and braking performances up until a final period of wear.

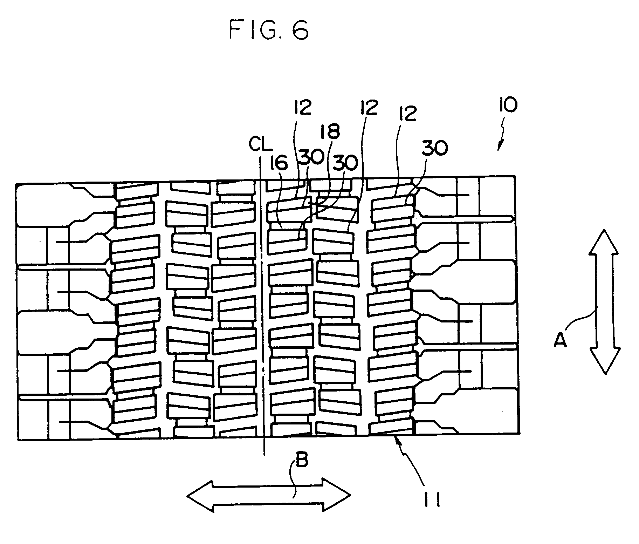

Referring now to Fig. 6, a description will be given of a third embodiment of the present invention. It should be noted that the same portions as those of the first embodiment will be denoted by the same reference numerals, and description thereof will be omitted.

In the same way as the pneumatic tire 10 in accordance with the first embodiment, the pneumatic tire 10 in accordance with the present embodiment has the tread 11 which is formed of two kinds of rubber in two layers in the direction of thickness of the tread 11. A foamed rubber having closed cells is used for the upper layer, while ordinary unfoamed rubber which has a low heat-generating characteristic is used for the lower layer.

An auxiliary sipe 30 extending substantially in the transverse direction of the tire (hereafter referred to as the transverse auxiliary sipe) is formed in each wide area 18 of the block 12. It should be noted that the total length of the transverse auxiliary sipe 30 projected onto the sipe 14 is preferably not less than 50% of the length of one sipe 14.

In addition, given that the depth of the sipe 14, as measured from the tread 16A of the narrow area 16, is $h_s$, that the depth of the transverse auxiliary sipe 30 is $h_a$, and that the average distance between the transverse auxiliary sipe 30 and an end of the block 12 or between the transverse auxiliary sipe 30 and the sipe 14 is $a$, the block 12 should preferably satisfy the relationships of $0.8 \times (h - h_s) < h_a < 2 \times (h - h_s)$ and $0.3 < h_a < 1.5$.

Next, a description will be given of the operation of the present embodiment.

When the tire is new, the surface of the tread of the upper layer 11A formed by being in contact with the mold is smooth, so that the edge effect due to the closed cells of the foamed rubber cannot be sufficiently demonstrated. However, the edge effect of the transverse auxiliary sipe 30 provided in the block 12 is capable of compensating for a shortage of the ground contact area when the tire is new and in an early period of wear, as well as for the lack of the edge effect of the closed cells. Hence, it is possible to obtain excellent braking and driving performances on ice and on wet road surfaces, coupled with the edge effect of the sipe 14.

As the wear of the tread 11 advances due to use, the transverse auxiliary sipe 30 is gradually worn out. At this time, the ground contact area of the tread 11 gradually increases, the surface roughness of the tread 11 appears, and the closed cells of the foamed rubber appear. By virtue of these effects and the edge effect of the sipe 14, it is possible to obtain excellent braking and driving performances on ice and on wet road surfaces up until the final period of wear.

The other operation and effects are similar to those of the first embodiment.

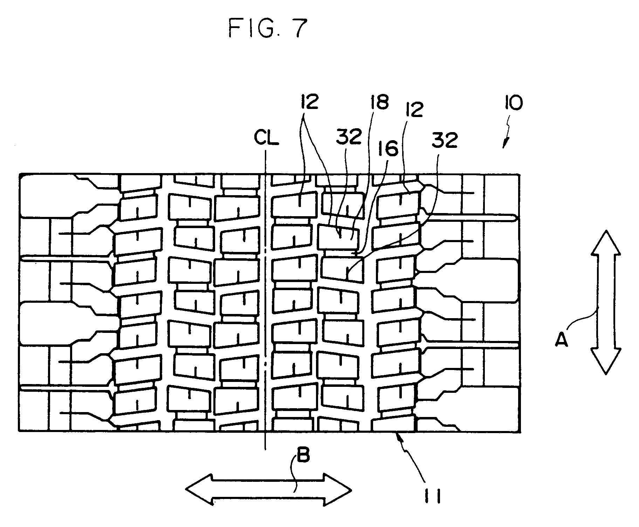

Referring now to Fig. 7, a description will be given of a fourth embodiment of the present invention. It should be noted that the same portions as those of the first embodiment will be denoted by the same reference numerals, and description thereof will be omitted.

The pneumatic tire 10 of the present embodiment is similar to that of the third embodiment except that, instead of the transverse auxiliary sipe, a sipe 132 extending substantially in the circumferential direction of the tire (hereafter referred to as the circumferential sipe) is formed in each wide area 18. The average depth of this circumferential sipe 132 is preferably in the range of 15% to 75% of the depth of the circumferential groove so as to maintain the rigidity of the block 12. By virtue of the edge effect of this circumferential sipe 132, it is possible to obtain excellent anti-skid performance.

As the wear of the tread 11 progresses due to use, the ground contact area of the tread 11 increases, the surface roughness of the tread 11 appears, and the closed cells appear. As a result, the pneumatic tire 10 in accordance with the present embodiment makes it possible to obtain constantly excellent anti-skid performance from the time when the tire is new until a final period of wear. The other operation and effects are similar to those of the first embodiment.

It should be noted that the ends, as viewed in the circumferential direction of the tire, of the block 12 may be inclined in either direction with respect to the transverse direction of the tire, and the direction of the sipe 14 may also be inclined in either direction with respect to the transverse direction of the tire.

(Test Examples)

Table 1 below shows results of measurement of the stopping distance of a truck on ice, in which a conventional pneumatic radial tire (the pneumatic tire having the blocks shown in Fig. 8) and the pneumatic radial tires in accordance with the present invention were respectively inflated up to prescribed internal pressure, and these pneumatic tires were mounted on all of the wheels of the truck (2D-4 type) in a loaded state.

The stopping distance of the conventional pneumatic radial tire is set as 100, and the measured values show that the smaller the numerical value, the shorter the stopping distance. Foamed rubber was used for the treads of all of the test tires, and the specifications of foaming were the same as described previously.

In addition, the tire size was 11R22.5 in all of the tires, and the number of blocks and the area of the tread which comes into contact with the road surface were set to be identical.

It should be noted that, in tire 5 in accordance with the embodiment of the present invention, the narrow area of the pneumatic radial tire shown in Fig. 1 was set to be lower than the wide area. Further, in tire 6 of the embodiment, the narrow area of the pneumatic radial tire shown in Fig. 1 was set to be lower than the wide area and the transverse auxiliary sipes were provided.

Table 1

|  | Conventional tire | Embodiment tire 1 | Embodiment tire 2 | Embodiment tire 3 | Embodiment tire 4 | Embodiment tire 5 | Embodiment tire 6 |
|---|---|---|---|---|---|---|---|
| **T** (mm) | 30 | 30 | ← | ← | ← | ← | ← |
| **W** (mm) | 30 | 30 | ← | ← | ← | ← | ← |
| **TL** (mm) | 13 | 13 | ← | ← | ← | ← | ← |
| **TS** (mm) | 3.5 | 3.5 | ← | ← | ← | ← | ← |
| **a** (mm) | 13 | 15.4 | 14.3 | 16 | 15.4 | 15.4 | 15.4 |
| **b** (mm) | 13 | 10.6 | 11.7 | 10 | 10.6 | 10.6 | 10.6 |
| **(a - b)/W** | 0 | 0.16 | 0.09 | 0.2 | 0.16 | 0.16 | 0.16 |
| **h** (mm) | 11 | 11 | ← | ← | ← | ← | ← |
| $\alpha$ (°) | 0 | 9 | 15 | 9 | 0 | 9 | 9 |
| $\beta$ (°) | 0 | 0 | 5 | -3 | 9 | 0 | 0 |
| Stopping distance of truck when tire is new | 100 | 91 | 97 | 93 | 94 | 95 | 90 |

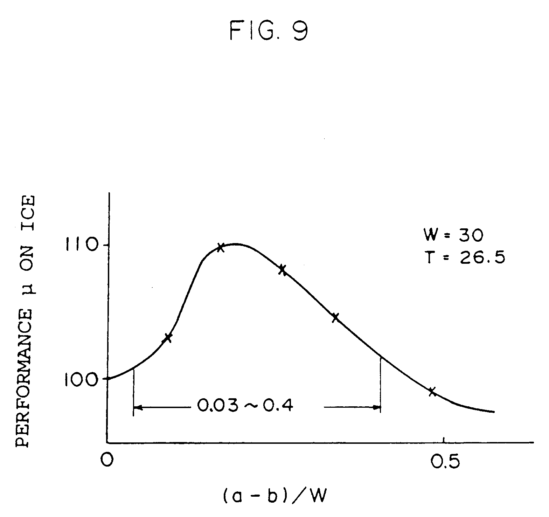

In addition, Fig. 9 shows the value of an index $\mu$ of the performance on ice in a case where the ratio between the length **a** of the longer side end of the wide area 18 in the circumferential direction of the tire and the length **b** of the shorter side end thereof in the circumferential direction of the tire is varied (incidentally, **W** was 30 mm, and **T** 26.5 mm). In this test, the test tires were mounted on a truck (2D-4, 10-wheeled), the truck was made to travel at 20 kilometers per hour, and brakes were applied to the tires in a locked state. The stopping distance was then measured, and the reciprocal of the stopping distance was set as the value of the index $\mu$ of the performance on ice. The values show that the larger the numerical value, the better the performance on ice.

It is apparent from the test results shown in both Table 1 and Fig. 9 that the pneumatic tire 10 in accordance with the present invention shows improved performance on ice as compared with conventional pneumatic tires.

Thus, the pneumatic tire in accordance with the present invention offers an outstanding advantage in that the edge pressure increases, so that the performance on ice can be improved over conventional pneumatic tires.

In addition, the pneumatic tire in accordance with the present invention offers outstanding advantages in that the rigidity of both the narrow area and the wide area can be optimally maintained, the difference in rigidity between the narrow area and the wide area is optimal, and the running performance can be improved while the durability of the blocks is maintained.

## Claims

1. A pneumatic tire comprising a plurality of blocks (12), wherein each of said blocks (12) has a set of two sipes (14) extending substantially in a transverse direction of the tire, said sipes (14) dividing said block into a narrow area (16) formed therebetween and wide areas (18) located so to sandwich said narrow area, characterized in that a length (**a**) of one side end of at least one of said wide areas (18) in a circumferential direction of the tire is different from a length (**b**) of another side end of said wide area (18) in the circumferential direction of the tire.

2. A pneumatic tire according to Claim 1, wherein a length of said wide area (18) in the circumferential direction of the tire is gradually larger from one side end of said wide area toward another side end of said wide area.

3. A pneumatic tire according to Claim 1 or 2, wherein a length, in the circumferential direction of the tire, of one of said wide areas (18) of one of said blocks (12) is gradually larger from one side end of said block toward another side end of said block, and a length, in the circumferential direction of the tire, of another of said wide areas (18) of said block is gradually larger from the other side end of said block toward the one side end of said block.

4. A pneumatic tire according to any one of the preceding Claims, wherein given that a depth of said sipe (14) is **h**, an average length of said narrow area (16) in the circumferential direction of the tire is **TS**, and an average length of said wide area (18) in the circumferential direction of the tire is **TL**, then $0.1 < TS/h < 0.5$, and $0.78 < TL/h < 2.07$.

5. A pneumatic tire according to any one of the preceding Claims, wherein a ratio between the average length **TS** of said narrow area (16) in the circumferential direction of the tire and the average length **TL** of said wide area (18) in the circumferential direction of the tire, i.e., **TS/TL**, is such that $0.1 \leq TS/TL \leq 0.8$.

6. A pneumatic tire according to any one of the preceding Claims, wherein a relationship between a length **a**, in the circumferential direction of the tire, of one side end of said wide area (18), a length **b**, in the circumferential direction of the tire, of another side end of said wide area (where **b < a**), and an average length **W**, in the transverse direction of the tire, of said block is such that $0.03 < (a - b)/W < 0.4$.

7. A pneumatic tire according to any one of the preceding Claims, wherein a relationship between a depth **hs** of said sipe as measured from a tread (16A) of said narrow area (16) and a depth **h** of said sipe as measured from a tread (18A) of said wide area (18) is such that $0.55 \leq h_s/h \leq 1$.

8. A pneumatic tire according to any one of the preceding Claims, wherein said wide area (18) is further provided with an auxiliary sipe (30) extending substantially in the transverse direction of the tire.

9. A pneumatic tire according to any one of Claims 1 to 7, wherein said wide area (18) is further provided with a sipe (32) extending substantially in the circumferential direction of the tire.

10. A pneumatic tire according to any one of the preceding Claims, wherein an angle $\beta$ formed by said sipe (14) with respect to the transverse direction of the tire is such that $0° \leq \beta < 15°$.

11. A pneumatic tire according to any one of the preceding Claims, wherein a tread (11) of said block is formed of two layers of rubber (11A, 11B), and an upper layer (11A) includes foamed rubber.

12. A pneumatic tire according to any one of the preceding Claims, wherein a length of said narrow area in the transverse direction of the tire is smaller than a length of said wide area in the transverse direction of the tire.

**Patentansprüche**

1. Luftreifen mit mehreren Blöcken (12), wobei jeder dieser Blöcke (12) einen Satz von zwei Lamellen (14) hat, die sich im wesentlichen in Querrichtung des Reifens erstrecken und wobei ferner die Lamellen (14) den Block in einen schmalen Bereich (16) sowie in breite Bereiche (18) unterteilen, die ihrerseits so angeordnet sind, daß der schmale Bereich zwischen ihnen liegt,
dadurch **gekennzeichnet,** daß die Länge (a) eines Seitenendes wenigstens eines der breiten Bereiche (18) in Umfangsrichtung des Reifens von der Länge (b) des anderen Seitenendes des breiten Bereiches (18) in Umfangsrichtung des Reifens abweicht.

2. Luftreifen nach Anspruch 1, wobei die Länge des breiten Bereiches (18) in Umfangsrichtung des Reifens von einem Seitenende des breiten Bereiches in Richtung auf das andere Seitenende des breiten Bereiches allmählich größer wird.

3. Luftreifen nach einem der Ansprüche 1 oder 2, wobei die Länge, in Umfangsrichtung des Reifens, eines der breiten Bereiche (18) von einem der Blöcke (12) von einem Seitenende des Blockes in Richtung auf das andere Seitenende dieses Blockes allmählich zunimmt und wobei eine Länge, in Umfangsrichtung des Reifens, eines weiteren, breiten Bereiches (18) des Blockes vom anderen Seitenende des Blockes auf das eine Seitenende des Blockes allmählich größer wird.

4. Luftreifen nach einem der vorangegangenen Ansprüche, wobei unter der Voraussetzung, daß die Tiefe der Lamelle (14) h ist, daß die durchschnittliche Länge des schmalen Bereiches (16) in Umfangsrichtung des Reifens TS ist und daß die durchschnittliche Länge des breiten Bereiches (18) in Umfangsrichtung des Reifens TL ist, $0,1 < TS/h < 0,5$ und $0,78 < TL/h < 2,07$.

**EP 0 590 916 B1**

**5.** Luftreifen nach einem der vorangegangenen Ansprüche, wobei das Verhältnis zwischen der durchschnittlichen Länge TS des schmalen Bereiches (16) in Umfangsrichtung des Reifens und die durchschnittliche Länge TL des breiten Bereiches (18) in Umfangsrichtung des Reifens, d.h. TS/TL so ist, daß $0,1 \leq TS/TL \leq 0,8$ .

**6.** Luftreifen nach einem der vorangegangenen Ansprüche, wobei die Beziehung zwischen der Länge a, in Umfangsrichtung des Reifens, an einem Seitenende des breiten Bereiches (18), einer Länge b, in Umfangsrichtung des Reifens, des anderen Seitenendes des breiten Bereiches (wobei b < a), und eine durchschnittliche Länge W, in Querrichtung des Reifens, des Blockes so ist, daß $0,03 < (a-b)/W < 0,4$ .

**7.** Luftreifen nach einem der vorangegangenen Ansprüche, wobei die Beziehung zwischen der Tiefe hs der Lamelle, gemessen vom Profil (16A) des schmalen Bereiches (16) aus und der Tiefe h der Lamelle, gemessen vom Profil (18A) des breiten Bereiches (18) aus, so ist, daß $0,55 \leq h_s/h \leq 1$ .

**8.** Luftreifen nach einem der vorangegangenen Ansprüche, wobei der breite Bereich (18) ferner mit einer Hilfslamelle (30) versehen ist, die sich im wesentlichen in Querrichtung des Reifens erstreckt.

**9.** Luftreifen nach einem der Ansprüche 1 bis 7, wobei der breite Bereich (18) ferner mit einer Lamelle (32) versehen ist, die sich im wesentlichen in Umfangsrichtung des Reifens erstreckt.

**10.** Luftreifen nach einem der vorangegangenen Ansprüche, wobei ein Winkel (β), der von der Lamelle (14) in bezug auf die Querrichtung des Reifens gebildet wird, so ist, daß $0° \leq \beta < 15°$ .

**11.** Luftreifen nach einem der vorangegangenen Ansprüche, wobei das Profil (11) des Blockes aus zwei Schichten von Gummi (11A, 11B) gebildet wird, wobei die obere Schicht (11A) geschäumten Gummi enthält.

**12.** Luftreifen nach einem der vorangegangenen Ansprüche, wobei die Länge des schmalen Bereichs in Querrichtung des Reifens kleiner ist als die Länge des breiten Bereiches in Querrichtung des Reifens.

**Revendications**

**1.** Pneumatique comprenant plusieurs blocs (12), chacun desdits blocs (12) comportant un groupe de deux lamelles (14) s'étendant pratiquement dans une direction transversale du pneumatique, lesdites lamelles (14) divisant ledit bloc en une surface étroite (16) formée entre elles, et des surfaces larges (18) agencées de sorte à prendre en sandwich ladite surface étroite, caractérisé en ce qu'une longueur (a) d'un côté d'extrémité d'au moins une desdites surfaces larges (18) dans une direction circonférentielle du pneumatique est différente d'une longueur (b) d'un autre côté d'extrémité de ladite surface large (18) dans la direction circonférentielle du pneumatique.

**2.** Pneumatique selon la revendication 1, dans lequel une longueur de ladite surface large (18) dans la direction circonférentielle du pneumatique augmente progressivement d'un côté d'extrémité de ladite surface large vers un autre côté d'extrémité de ladite surface large.

**3.** Pneumatique selon les revendications 1 ou 2, dans lequel une longueur dans la direction circonférentielle du pneumatique de l'une desdites surfaces larges (18) de l'un desdits blocs (12) augmente progressivement d'un côté d'extrémité dudit bloc vers un autre côté d'extrémité dudit bloc, et en ce qu'une longueur dans la direction circonférentielle du pneumatique d'une autre desdites surfaces larges (18) dudit bloc augmente progressivement de l'autre côté d'extrémité dudit bloc vers ledit un côté d'extrémité dudit bloc.

**4.** Pneumatique selon l'une quelconque des revendications précédentes, dans lequel, en supposant qu'une profondeur de ladite lamelle (14) correspond à h, une longueur moyenne de ladite surface étroite (16) dans la direction circonférentielle du pneumatique correspondant à TS, et une longueur moyenne de ladite surface large (18) dans la direction circonférentielle du pneumatique correspondant à TL, on a $0,1 < TS/h < 0,5$ et $0,78 < TL/h < 2,07$ .

**5.** Pneumatique selon l'une quelconque des revendications précédentes, dans lequel un rapport entre la longueur moyenne TS de ladite surface étroite (16) dans la direction circonférentielle du pneumatique et la longueur moyenne TL de ladite surface large (18) dans la direction circonférentielle du pneumatique, c.à.d. le rapport TS/TL, est tel que $0,1 \leq TS/TL \leq 0,8$ .

**6.** Pneumatique selon l'une quelconque des revendications précédentes, dans lequel une relation entre une longueur a dans la direction circonférentielle du pneumatique d'un côté d'extrémité de ladite surface large (18), une longueur b, dans la direction circonférentielle du pneumatique d'un autre côté d'extrémité de ladite surface large (où b < a) et une longueur moyenne W dans la direction transversale du pneumatique dudit bloc est telle que 0,03 < (a - b)/W < 0,4 .

7. Pneumatique selon l'une quelconque des revendications précédentes, dans lequel une relation entre une profondeur $h_s$ de ladite lamelle, mesurée dans une bande de roulement (16A) de ladite surface étroite (16), et une profondeur h de ladite lamelle mesurée dans une bande de roulement (18A) de ladite surface large (18) sont telles que $0,55 \leq h_s/h \leq 1$ .

8. Pneumatique selon l'une quelconque des revendications précédentes, dans lequel ladite surface large (18) comporte en outre une lamelle auxiliaire (30) s'étendant pratiquement dans la direction transversale du pneumatique.

9. Pneumatique selon l'une quelconque des revendications 1 à 7, dans lequel ladite surface large (18) comporte en outre une lamelle (32) s'étendant pratiquement dans la direction circonférentielle du pneumatique.

10. Pneumatique selon l'une quelconque des revendications précédentes, dans lequel un angle $\beta$ formé par ladite lamelle (14) par rapport à la direction transversale du pneumatique est tel que $0° \leq \beta < 15°$.

11. Pneumatique selon l'une quelconque des revendications précédentes, dans lequel une bande de roulement (11) dudit bloc est formée de deux couches de caoutchouc (11A, 11B), une couche supérieure (11A) englobant du caoutchouc mousse.

12. Pneumatique selon l'une quelconque des revendications précédentes, dans lequel une longueur de ladite surface étroite dans la direction transversale du pneumatique est plus petite qu'une longueur de ladite surface large dans la direction transversale du pneumatique.

# FIG. 1

## FIG. 2A

## FIG. 2B

FIG. 3

FIG. 4

FIG. 5

FIG. 6

FIG. 7

# FIG. 8

FIG. 9